# EUROPÄISCHE PATENTSCHRIFT

(11) **EP 1 862 356 B1**
(45) Veröffentlichungstag und Bekanntmachung des Hinweises auf die Patenterteilung: **06.01.2010**
(21) Anmeldenummer: 07105595.8
(22) Anmeldetag: 04.04.2007
(51) Int. Cl.: B60R 13/02, F16B 5/06, F16B 19/00, F16B 21/08

(54) **Befestigungsclip**
Retaining clip
Clip de fixation

(30) Priorität: 30.05.2006 DE 102006024989
(43) Veröffentlichungstag der Anmeldung: 05.12.2007
(73) Patentinhaber: Ford-Werke GmbH, 50735 Köln (DE)
(72) Erfinder: Bock, Andreas, 40789 Monheim (DE); Freitag, Jürgen, 40593 Düsseldorf (DE); Gangal, Manoj, 50733 Köln (DE)
(74) Vertreter: Drömer, Hans-Carsten

(56) Entgegenhaltungen:
- EP-A1- 1 369 304
- DE-A1- 19 739 350
- GB-A- 1 122 363
- GB-A- 1 539 056

## Beschreibung

Die vorliegende Erfindung betrifft einen Befestigungsclip zur lösbaren Verbindung zweier oder mehrerer Teile eines Gegenstandes, insbesondere eines zumindest im Bereich der herzustellenden Verbindung Teiles mit einem weiteren, mit dem Clip verbundenen Teil, insbesondere eines Karosserieteiles mit einem geformten Verkleidungsteil aus Kunststoff für den Innenraum eines Kraftfahrzeuges.

Derartige Befestigungsvorrichtungen sind als rotationssymmetrische Pilze oder als im Querschnitt pilzförmige Profilabschnitte mit Schlitz in der Längsmittelebene bekannt, siehe zum Beispiel EP 1 369 304 A1. Dabei ist der Clip vorzugsweise an dem Verkleidungsteil, das durch Pressen, Extrudieren oder Spritzgießen hergestellt sein kann, einstückig angeformt. Bei der Befestigung wird eine Bohrung des zu befestigende Teils über den Pilzkopf gebracht, die dann über den Pilzkopf gedrückt wird, wobei der Pilzkopf vermöge des Schlitzes bei seinem Durchgang durch die Bohrung quer zu seiner Längsmittelebene zusammengedrückt wird.

Insbesondere bei der industriellen, roboterunterstützten Montage derartiger Teile kommt es darauf an, dass die Befestigung, das Anclipsen, innerhalb kürzester Zeiträume erfolgen kann und der erforderliche Andruck zum Clipsen, der durch das Material und die geometrische Ausführung des Pilzes vorbestimmt ist, innerhalb bestimmter Toleranzen liegt. Toleranzen des erforderlichen Andrucks resultieren insbesondere auch aus Fertigungstoleranzen der aneinander zu befestigenden Teile und Toleranzen der Positionierung der Bohrung des anzuclipsenden Teils über dem Pilzkopf vor dem Clipsen.

Weiterhin ist es erforderlich, daß das Verkleidungsteil mit dem angeformten Befestigungsclip zerstörungsfrei demontiert werden kann, d. h. das Verkleidungsteil und/oder die Befestigungsclipse dürfen bei der Demontage nicht zerstört werden, da, insbesondere wenn Befestigungsclipse und Verkleidungsteil einstückig ausgeführt sind, das komplette Verkleidungsteil ersetzt werden müßte.

Aufgabe der Erfindung ist es daher, einem Befestigungsclip zur Verfügung zu stellen, der eine Befestigung bei geringen Andrucktoleranzen innerhalb kurzer Zeiträume erlaubt und/oder der ein Lösen der Befestigung bei geringen Toleranzen der Abzugskraft erlaubt. Eine weitere Aufgabe ist es, daß der Befestigungsclip einstückig mit dem zu befestigenden Verkleidungsteiles ausgeführt sein kann.

Es wurde gefunden, dass diese Aufgaben dadurch gelöst werden, wenn der Clip eine gewisse Beweglichkeit des Pilzkopfes im Sinne einer Krängung zu seiner Längsachse erlaubt. Ferner wurde gefunden, dass die Krängung durch die Vorsehung einer Dehnungsfalte quer zur Andruckrichtung in dem Pilzstamm ermöglicht wird.

Gegenstand der Erfindung ist demnach ein Befestigungsclip, der pilzförmig ausgebildet ist, wobei das zu befestigende Teil mittels einer an diesem vorgesehenen Ausnehmung über den Pilzkopf gegen eine mit dem Clips verbundene Anlagefläche ge-clipst wird, der dadurch gekennzeichnet ist, dass der Stamm des Pilzes eine Dehnungsfalte quer zu seiner Längsausdehnung aufweist.

Vorzugsweise ist der Stamm des Pilzes durch eine Öffnung der Auflagefläche verlängert, wobei die Verlängerung die Dehnungsfalte aufweist.

Weiter bevorzugt erstreckt sich die Verlängerung des Pilzstammes sich innerhalb eines zum Pilzkopf hin offenen Gehäuses, dessen dem Pilzkopf zugewandte obere Fläche die Auflagefläche bildet, und mindestens eine der weiteren Gehäusebegrenzungen mit dem Teil, an dem befestigt werden soll, verbindbar ist, insbesondere mit diesem fest verbunden ist, weiter bevorzugt, an diesem angeformt ist.

Die Dehnungsfalte ist vorzugsweise in Form einer etwa 270°-Dehnungsfalte ausgebildet.

Weiter bevorzugt sind Mittel vorgesehen, die eine Stauchung der Dehnungsfalte während des Einclipsens begrenzen. Die Mittel zur Begrenzung der Stauchung der Dehnungsfalte sind vorteilhaft in Form eines Anschlages innerhalb Öffnung der Dehnungsfalte unter Freilassung eines Stauchspaltes ausgebildet. Der Anschlag kann an einem der Schenkel der Dehnungsfalte angeformt sein. Vorteilhaft kann das Mittel zur Begrenzung der Stauchung auch dadurch realisiert werden, dass die Dehnungsfalte sich über mehr als 270° erstreckt, insbesondere über 300 bis 330°. Die Stauchungsbegrenzung ist dann gegeben, wenn die Dehnungsfalte an dem Anschlag anliegt bzw. geschlossen ist.

Weiterhin bevorzugt sind Mittel vorgesehen sind, die eine Aufweitung entgegen der Stauchungsrichtung der Dehnungsfalte begrenzen. Die Begrenzungsmittel der Aufweitung der Dehnungsfalte können als an der Verlängerung des Pilzstammes oberhalb der Zugentlastung angeordnete, nach außen gerichtete Streben, die gegen die Unterseite der Auflagefläche sperren, ausgebildet sein. Im Ruhezustand und in angeclipstem Zustand haben die Streben ein Spiel zur Unterseite der Auflagefläche.

Weiter bevorzugt weist der Pilz in an sich bekannter Weise eine sich in seiner Längsmittelebene erstreckende Ausnehmung auf, die vorzugsweise als Schlitz ausgebildet ist.

Der erfindungsgemäße Befestigungsclip kann bezüglich seiner Längsachse rotationssymmetrisch oder als Profilabschnitt ausgebildet sein. Aus fertigungstechnischen Gründen ist zumindest der Bereich der Dehnungsfalte und das Gehäuse als Profilabschnitt ausgebildet. Ist der Befestigungsclip als Profilabschnitt ausgebildet, beträgt die Länge des Profilabschnitts vorzugsweise 50 bis 200%, insbesondere bevorzugt 80 bis 120%, der Querausdehnung der Pilzkopfunterseite. Die Stirnseite des Profilabschnitts sind im Bereich des Pilzkopfes vorteilhaft leicht, die Profillänge nach oben verjüngend, abgeschrägt, so dass auch eine Krängung des Pilzkopfes in Richtung der Länge des Profilabschnitts ermöglicht wird.

Die Unterseite des Pilzkopfes kann eben ausgebildet sein, mit einer zur leichteren Lösung der Clipverbindung abgerundeten Rastkante oder vorzugsweise keilförmig oder konisch mit Erweiterung nach oben ausgebildet sein, wobei die Unterseite einen nach oben öffnenden Konus- oder Keilwinkel von 50 bis 70° aufweist.

Die Oberseite des Pilzkopfes weist vorzugsweise zumindest in dem Bereich, in dem die Öffnung des zu befestigenden Teils beim Einclipsen aufgleitet, einen nach unten öffnenden Konus- bzw. Keilwinkel von 30 bis 55° auf.

Der erfindungsgemäße Befestigungsclip kann aus gummielastischem Material bestehen, bevorzugt besteht dieser aus einem elastomeren Kunststoffmaterial, insbesondere einem thermoplastischen Elastomeren.

Bevorzugt findet der Befestigungsclip Verwendung bei der Befestigung von Verkleidungsteilen, insbesondere von Fahrzeugen und dort insbesondere bei der Verwendung für die Befestigung von Verkleidungsteilen im Innenraum des Fahrzeugs. Die Verwendung des Befestigungsclips ist jedoch nicht darauf beschränkt, sonder er kann überall dort eingesetzt werden, wo ein Teil in ein anderes mit genau definierten Kräften eingeclipt und wieder zerstörungsfrei demontiert werden muß, also Verkleidungsteile aller Art in Bauwerken, Möbeln, Flugzeugen, Schiffen usw. Die Teile selbst können alle einzuclipende Teile sein wie z.B. Kabelhalter, Montagehalter usw.

Vorteilhaft bei der Verwendung ist der Befestigungsclip mit dem zu montierendem Teil einstückig ausgeführt. Dabei kann der Befestigungsclip aus dem gleichen Material wie das Teil sein oder aus einem anderen, z. B. elastischeren Material. Dies erlaubt die kostengünstige Herstellung des Teiles selber sowie die kostengünstige und sichere Montage, da der Befestigungsclip nicht am Teil vormontiert werden muß und er auch nicht falsch am Teil vormontiert werden kann. Damit reduziert sich insgesamt der Montageaufwand für ein Teil mit dem erfindungsgemäßen Befestigungsclip erheblich.

Die Erfindung wird anhand der beigefügten Figuren ohne Beschränkung der Allgemeinheit der Beschreibung näher erläutert:
- Figur 1: zeigt einen erfindungsgemäßen Befestigungsclip mit ebener Pilzkopfunterseite als Seitenansicht auf als Profilabschnitt ausgebildeten erfindungsgemäßen Befestigungsclip oder als Schnitt durch einen mit Ausnahme des Schlitzes und im Bereich der Dehnungsfalte rotationssymmetrischen Clip.
- Figur 2: zeigt einen erfindungsgemäßen gemäß Fig. 1, jedoch mit keil- bzw. konischer Pilzkopfunterseite.
- Figuren 3 und 4: zeigen Ausführungsformen der Erfindung mit alternativer Ausführung der Dehnungsfalte und der Stauchungsbegrenzung. Die Bezugszeichen in den Figuren bezeichnen jeweils gleiche Elemente.

Der Clip 1 besteht aus einem Pilzkopf 2 mit einer ebenen bzw. konischen Pilzkopfunterseite 3 bzw. 4, einem Pilzstamm 5, der sich bis zur Unterseite 7 des Gehäuses 6 erstreckt. Der Pilz 2,5 weist einen Schlitz 16 auf. Die Oberseite des Gehäuses 6 bildet die Anlagefläche 9 für das zu befestigende Teil und weist eine Öffnung 8 auf, durch die sich der Pilzstamm 5 erstreckt. Der Pilzstamm 5 weist innerhalb des Gehäuses 6 eine Dehnungs- bzw. Stauchfalte 10 auf, die einen Winkelbereich von 270° umschließt. Innerhalb der Falte 10 ist ein Anschlag 11 zur Begrenzung der Stauchung vorgesehen. Im Falle einer einseitig seitlichen Belastung des Pilzkopfes 2 wird die Falte 10 auf der einen Seite gestaucht und auf der anderen Seite gedehnt, so dass der Pilzkopf 2 der Belastung durch Krängung ausweichen kann, sich also beim Einclipsen des zu befestigenden Teiles 13 in Bezug auf dessen Öffnung 14 selbst zentriert. An dem Pilzstamm 5 sind ferner innerhalb des Gehäuses 6 seitliche Streben 15 angeordnet, die beim Abzug des angeclipsten Teils gegen die Innenseite der oberen Gehäusewand sperren und so die Aufweitung der Dehnungsfalte 10 begrenzen.

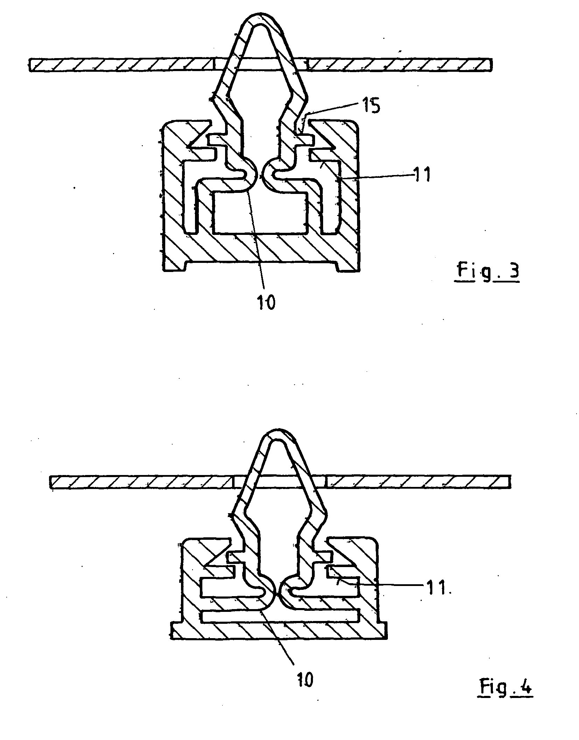

In der Ausführungsform der Erfindung gemäß Fig. 3 ist die Dehnungsfalte 10 nach innen in den Pilzstamm gerichtet. Das Mittel zur Stauchungsbegrenzung ist hier als an der Gehäusewand angeordnete Auflagestrebe 11 ausgebildet, die an der zur Aufweitungsbegrenzung vorgesehenen Strebe 15 angreift.

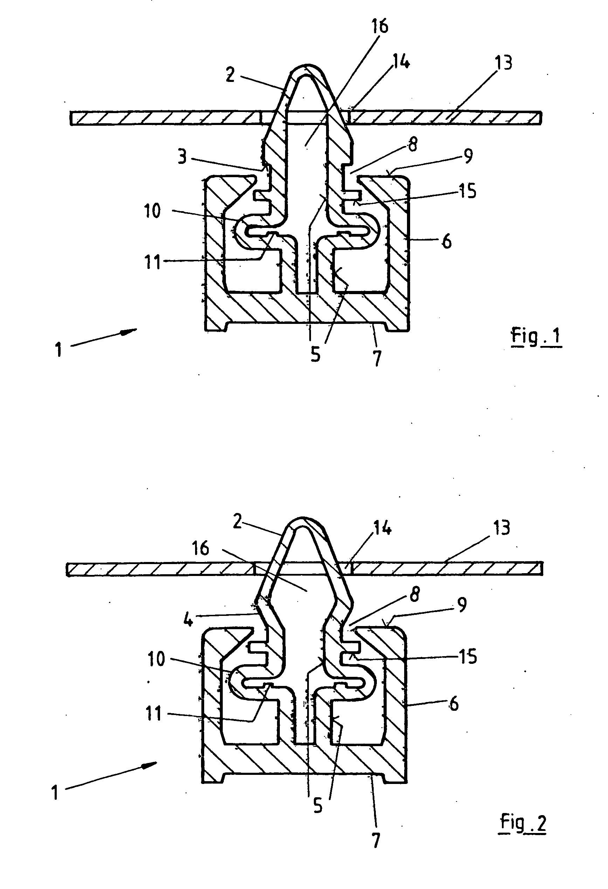

Bei der Ausführungsform der Erfindung gemäß Fig. 4 ist der untere Schenkel der Dehnungsfalte 10 zur Seitenwand des Gehäuses geführt und dort angeformt, so dass der Befestigungsclip flacher gestaltet werden kann, als in den Ausführungsformen gemäß Fig. 1-3.

## Patentansprüche

1. Befestigungsclip, der pilzförmig ausgebildet ist, wobei das zu befestigende Teil mittels einer an diesem vorgesehenen Ausnehmung über den Pilzkopf 2 gegen eine mit dem Clips verbundene Anlagefläche 9 geclipst wird, **dadurch gekennzeichnet, dass** der Stamm des Pilzes 5 eine Dehnungsfalte 10 aufweist.

2. Befestigungsclip nach Anspruch 1, **dadurch gekennzeichnet, dass** der Stamm des Pilzes durch eine Öffnung 8 der Auflagefläche 9 verlängert ist und die Verlängerung die Dehnungsfalte 10 aufweist.

3. Befestigungsclip nach Anspruch 2, **dadurch gekennzeichnet, dass** die Verlängerung des Pilzstammes 5 sich innerhalb eines zum Pilzkopf hin offenen Gehäuses 6, dessen dem Pilzkopf zugewandte obere Fläche die Auflagefläche 9 bildet, erstreckt und mindestens eine der weiteren Gehäusebegrenzungen mit dem Teil, an dem befestigt werden soll, verbindbar ist.

4. Befestigungsclip nach einem der Ansprüche 1 bis 3, **dadurch gekennzeichnet, dass** dieser über das Gehäuse mit dem Teil, an dem befestigt werden soll, fest verbunden ist.

5. Befestigungsclip nach einem der Ansprüche 1 bis 4, **dadurch gekennzeichnet, dass** die Dehnungsfalte 10 in Form einer etwa 270°-Dehnungsfalte ausgebildet ist.

6. Befestigungsclip nach einem der Ansprüche 1 bis 5, **dadurch gekennzeichnet, dass** der Pilz eine sich in Richtung der Längsmittelebene erstreckende Ausnehmung 16 aufweist. ,

7. Befestigungsclip nach Anspruch 6, **dadurch gekennzeichnet, dass** die Ausnehmung 16 ein Schlitz ist.

8. Befestigungsclip nach einem der Ansprüche 1 bis 7, **dadurch gekennzeichnet, dass** Mittel 11 vorgesehen sind, die eine Stauchung der Dehnungsfalte während des Einclipsens begrenzen.

9. Befestigungsclip nach einem der Ansprüche 1 bis 8, **dadurch gekennzeichnet, dass** Mittel 15 vorgesehen sind, die eine Aufweitung Dehnungsfalte begrenzen.

10. Befestigungsclip nach Anspruch 9, **dadurch gekennzeichnet, dass** die Begrenzungsmittel 15 als an der Verlängerung des Pilzkopfes oberhalb der Dehnungsfalte 10 angeordnete, nach außen gerichtete Streben, die gegen die Unterseite der Auflagefläche sperren, ausgebildet sind.

11. Befestigungsclip nach einem der Ansprüche 1 bis 10, **dadurch gekennzeichnet, dass** dieser aus gummielastischem Material besteht.

12. Befestigungsclip nach Anspruch 11, **dadurch gekennzeichnet, dass** dieser rotationssymmetrisch ausgebildet ist.

13. Befestigungsclip nach einem der Ansprüche 1 bis 11, **dadurch gekennzeichnet, dass** dieser als Profilabschnitt parallel zur Pilzmittelebene ausgebildet ist.

14. Befestigungsclip nach Anspruch 12, **dadurch gekennzeichnet, dass** dieser aus elastomeren Kunststoffmaterial besteht.

15. Befestigungsclip nach einem der Ansprüche 1 bis 14, **dadurch gekennzeichnet, dass** die Unterseite 4 des Pilzkopfes 2 keilförmig oder konisch mit Erweiterung nach oben ausgebildet ist.

16. Befestigungsclip nach Anspruch 15, **dadurch gekennzeichnet, dass** der Pilzkopf an seiner Unterseite einen nach oben öffnenden Konus- oder Keilwinkel von 50 bis 70° aufweist.

17. Befestigungsclip nach einem der Ansprüche 1 bis 16, **dadurch gekennzeichnet, dass** die Oberseite des Pilzkopfes 2 einen Konus- bzw. Keilwinkel von 30 bis 55° aufweist.

18. Verkleidungsteil mit mindestens einem Befestigungsclip nach einem der vorherigen Ansprüche.

19. Verkleidungsteil nach Anspruch 18, **dadurch gekennzeichnet daß** zumindest ein Befestigungsclip mit dem Verkleidungsteil einstückig ausgeführt ist.

20. Verkleidungsteil nach Anspruch 18 oder 19, **dadurch gekennzeichnet daß** der Befestigungsclip aus dem gleichen Material wie das Verkleidungsteil besteht.

21. Verkleidungsteil nach einem der Ansprüche 18 bis 20 zur Verwendung in einem Fahrzeuginnenraum.

## Claims

1. Retaining clip which is of mushroom-shaped design, with the part for fastening being clipped, by means of a recess provided thereon, by the mushroom head 2 against a contact surface 9 which is connected to the clip, **characterized in that** the stem of the mushroom 5 has an expansion fold 10.

2. Retaining clip according to Claim 1, **characterized in that** the stem of the mushroom is elongated through an opening 8 in the contact surface 9 and the elongation has the expansion fold 10.

3. Retaining clip according to Claim 2, **characterized in that** the elongation of the mushroom stem 5 extends within a housing 6 which is open toward the mushroom head and whose upper surface, which faces toward the mushroom head, forms the contact surface 9, and at least one of the further housing boundaries can be connected to the part to which fastening is to take place.

4. Retaining clip according to one of Claims 1 to 3, **characterized in that** said retaining clip is fixedly connected by means of the housing to the part to which fastening is to take place.

5. Retaining clip according to one of Claims 1 to 4, **characterized in that** the expansion fold 10 is formed as an approximately 270° expansion fold.

6. Retaining clip according to one of Claims 1 to 5, **characterized in that** the mushroom has a recess 16 which extends in the direction of the longitudinal central plane.

7. Retaining clip according to Claim 6, **characterized in that** the recess 16 is a slot.

8. Retaining clip according to one of Claims 1 to 7, **characterized in that** means 11 are provided which limit a compression of the expansion fold during the clipping-in process.

9. Retaining clip according to one of Claims 1 to 8, **characterized in that** means 15 are provided which limit a flaring of the expansion fold.

10. Retaining clip according to Claim 9, **characterized in that** the delimiting means 15 are designed as outwardly directed struts which are arranged on the elongation of the mushroom head above the expansion fold 10 and which block against the underside of the contact surface.

11. Retaining clip according to one of Claims 1 to 10, **characterized in that** said retaining clip is composed of resiliently elastic material.

12. Retaining clip according to Claim 11, **characterized in that** said retaining clip is of rotationally symmetrical design.

13. Retaining clip according to one of Claims 1 to 11, **characterized in that** said retaining clip is designed as a profile section parallel to the mushroom central plane.

14. Retaining clip according to Claim 12, **characterized in that** said retaining clip is composed of elastomeric plastic material.

15. Retaining clip according to one of Claims 1 to 14, **characterized in that** the underside 4 of the mushroom head 2 is of wedge-shaped or conical design, widening in the upward direction.

16. Retaining clip according to Claim 15, **characterized in that** the mushroom head has, on its underside, an upwardly opening cone or wedge angle of 50 to 70°.

17. Retaining clip according to one of Claims 1 to 16, **characterized in that** the upper side of the mushroom head 2 has a cone or wedge angle of 30 to 55°.

18. Lining part having at least one retaining clip according to one of the preceding claims.

19. Lining part according to Claim 18, **characterized in that** at least one retaining clip is formed in one piece with the lining part.

20. Lining part according to Claim 18 or 19, **characterized in that** the retaining clip is composed of the same material as the lining part.

21. Lining part according to one of Claims 18 to 20 for use in a vehicle interior space.

## Revendications

1. Clip de fixation, réalisé en forme de champignon, la partie à fixer étant enclipsée au moyen d'un évidement prévu sur celle-ci par-dessus la tête de champignon 2 contre une surface d'appui 9 connectée au clip, **caractérisé en ce que** la tige du champignon 5 présente un pli d'extension 10.

2. Clip de fixation selon la revendication 1, **caractérisé en ce que** la tige du champignon est prolongée par une ouverture 8 de la surface d'appui 9 et la prolongation présente le pli d'extension 10.

3. Clip de fixation selon la revendication 2, **caractérisé en ce que** la prolongation de la tige de champignon 5 s'étend à l'intérieur d'un boîtier 6 ouvert vers la tête de champignon, dont la surface supérieure tournée vers la tête de champignon forme la surface d'appui 9, et au moins l'une des autres limitations du boîtier peut être connectée à la partie sur laquelle on veut effectuer la fixation.

4. Clip de fixation selon l'une quelconque des revendications 1 à 3, **caractérisé en ce que** celui-ci est connecté fixement par le biais du boîtier à la partie sur laquelle on veut effectuer la fixation.

5. Clip de fixation selon l'une quelconque des revendications 1 à 4, **caractérisé en ce que** le pli d'extension 10 est réalisé en forme de pli d'extension d'environ 270°.

6. Clip de fixation selon l'une quelconque des revendications 1 à 5, **caractérisé en ce que** le champignon présente un évidement 16 s'étendant dans la direction du plan médian longitudinal.

7. Clip de fixation selon la revendication 6, **caractérisé en ce que** l'évidement 16 est une fente.

8. Clip de fixation selon l'une quelconque des revendications 1 à 7, **caractérisé en ce que** des moyens 11 sont prévus, lesquels limitent un écrasement du pli d'extension pendant l'enclipsage.

9. Clip de fixation selon l'une quelconque des revendications 1 à 8, **caractérisé en ce que** des moyens 15 sont prévus pour limiter un élargissement du pli d'extension.

10. Clip de fixation selon la revendication 9, **caractérisé en ce que** les moyens de limitation 15 sont réalisés sous forme de renforts disposés sur la prolongation de la tête de champignon au-dessus du pli d'extension 10 et orientés vers l'extérieur, qui réalisent un blocage vers le côté inférieur de la surface d'appui.

11. Clip de fixation selon l'une quelconque des revendications 1 à 10, **caractérisé en ce que** celui-ci se compose d'un matériau élastomère.

12. Clip de fixation selon la revendication 11, **caractérisé en ce que** celui-ci est réalisé avec une symétrie de révolution.

13. Clip de fixation selon l'une quelconque des revendications 1 à 11, **caractérisé en ce que** celui-ci est réalisé sous forme de portion profilée parallèle au plan médian du champignon.

14. Clip de fixation selon la revendication 12, **caractérisé en ce que** celui-ci se compose d'un matériau en plastique élastomère.

15. Clip de fixation selon l'une quelconque des revendications 1 à 14, **caractérisé en ce que** le côté inférieur 4 de la tête de champignon 2 est réalisé en forme de coin ou en forme conique avec un élargissement vers le haut.

16. Clip de fixation selon la revendication 15, **caractérisé en ce que** la tête de champignon présente sur son côté inférieur un angle de conicité ou de coin s'ouvrant vers le haut de 50 à 70°.

17. Clip de fixation selon l'une quelconque des revendications 1 à 16, **caractérisé en ce que** le côté supérieur de la tête de champignon 2 présente un angle de conicité ou de coin de 30 à 55°.

18. Pièce d'habillage comprenant au moins un clip de fixation selon l'une quelconque des revendications précédentes.

19. Pièce d'habillage selon la revendication 18, **caractérisée en ce qu'**au moins un clip de fixation est réalisé d'une seule pièce avec la pièce d'habillage.

20. Pièce d'habillage selon la revendication 18 ou 19, **caractérisée en ce que** le clip de fixation se compose du même matériau que la pièce d'habillage.

21. Pièce d'habillage selon l'une quelconque des revendications 18 à 20, pour l'utilisation dans l'habitacle d'un véhicule.
